# EUROPEAN PATENT APPLICATION

(11) **EP 4 215 462 A1**
(43) Date of publication of application: **26.07.2023**
(21) Application number: 21874722.8
(22) Date of filing: 22.10.2021
(51) Int. Cl.: B65G 15/12, B65G 47/30

(54) **ARTICLE TRANSPORT APPARATUS**

(30) Priority: 02.10.2020 JP 2020167631
(71) Applicant: Daifuku Co., Ltd., Osaka 555-0012 (JP)
(72) Inventor: IWATA, Masashige, Gamo-gun, Shiga 529-1692 (JP); KIMURA, Kazunari, Gamo-gun, Shiga 529-1692 (JP)
(74) Representative: Grosse, Felix Christopher
(86) International application number: PCT/IB2021/059749
(87) International publication number: WO 2022/070171

(57) **Abstract**

An article transport apparatus includes a first belt conveyor (11), and a second belt conveyor (12) adjacent to the first belt conveyor (11) on a second side in the width direction (W2). The first belt conveyor (11) includes a first belt member (11B) forming a first transport surface (11F), and a second belt conveyor (12) includes a second belt member (12B) forming a second transport surface (12F). The first transport surface (11F) is configured to allow an article being transported to be placed thereon, and is inclined downward toward the second side in the width direction (W2), the second transport surface (12F) is configured to come into contact, from the second side in the width direction (W2), with the article placed on the first transport surface (11F), and a surface friction coefficient (µ1) of the first belt member (11B) and a surface friction coefficient (p2) of the second belt member (12B) are different from each other.

## Description

### Technical Field

The present invention relates to an article transport apparatus that transports an article.

### Background Art

An example of such an article transport apparatus is disclosed in JP H02-178106A (Patent Document 1). In the following, the reference numerals shown in parentheses in the description of the related art are those of Patent Document 1.

The article transport apparatus disclosed in Patent Document 1 includes an aligning conveyor (5) that transports an article (M) in a transport direction, and a guide conveyor (15) that is adjacent to the aligning conveyor (5) in a width direction orthogonal to the transport direction as viewed in a vertical direction, and comes into contact with a side surface of the article (M) placed on the aligning conveyor (5). Also, an introduction conveyor (4) that introduces the article (M) to the aligning conveyor (5) from a position outward in the width direction is provided opposite to the guide conveyor (15) in the width direction, with the aligning conveyor (5) interposed between the guide conveyor (15) and the introduction conveyor (4). The aligning conveyor (5) and the guide conveyor (15) are configured to transport, in the transport direction, the article (M) introduced from the introduction conveyor (4).

The aligning conveyor (5) includes a forward conveyor (5A) and a reverse conveyor (5B) that are arranged in the width direction. The forward conveyor (5A) and the reverse conveyor (5B) are driven toward opposite sides in the transport direction. Thus, the respective positions of the forward conveyor (5A) and the reverse conveyor (5B) that come into contact with the article (M) introduced from the position outward in the width direction by the introduction conveyor (4) are moved to the opposite sides in the transport direction, thus rotating the article (M) to change the orientation thereof.

### Prior Art Documents

### Patent Document

Patent Document 1: JP H02-178106A

### Disclosure of the Invention

### Problem to be Solved by the Invention

As described above, the article transport apparatus disclosed in Patent Document 1 requires the forward conveyor (5A), the reverse conveyor (5B), and the guide conveyor (15) in order to perform the orientation change and the transport of the article (M) in the transport direction. This is likely to complicate the structure due to an increased number of required conveyors, and complicate the control as well since it is necessary for the forward conveyor (5A) and the reverse conveyor (5B) to be driven in different directions while causing the two conveyors to operate in conjunction with each other.

In view of the above-described circumstances, it is desirable to realize a technique for facilitating simplification of the structure and control of an article transport apparatus that performs the transfer and the orientation change of articles.

### Means for Solving Problem

An article transport apparatus configured to transport an article in a transport direction, including:
with a width direction being a direction orthogonal to the transport direction as viewed in a vertical direction, a first side in the width direction being one side in the width direction, and a second side in the width direction being another side in the width direction,
a first belt conveyor extending in the transport direction;
a second belt conveyor adjacent to the first belt conveyor on the second side in the width direction and extending in the transport direction; and
a supply section configured to supply the article to the first belt conveyor,
wherein the first belt conveyor includes a first belt member forming a first transport surface with which the article being transported comes into contact, and a first driving unit configured to drive the first belt member,
the second belt conveyor includes a second belt member forming a second transport surface with which the article being transported comes into contact, and a second driving unit configured to drive the second belt member,
the supply section is configured to supply the article to the first belt conveyor from the first side in the width direction,
the first transport surface is configured to allow the article being transported to be placed thereon, and is inclined downward toward the second side in the width direction,
the second transport surface is adjacent to the first transport surface on the second side in the width direction, and is configured to come into contact, from the second side in the width direction, with the article placed on the first transport surface, and
a surface friction coefficient of the first belt member and a surface friction coefficient of the second belt member are different from each other.

With this configuration, the article supplied to the first belt conveyor by the supply section can be moved, by the inclination of the first transport surface, from the first side in the width direction toward the second side in the width direction on which the second belt conveyor is disposed, and be brought into contact with the second transport surface. Upon the article being brought into contact with both the first transport surface and the second transport surface from the state in which the article moves toward the second side in the width direction while being in contact with only the first transport surface, the force acting in the transport direction can be made different between a portion of the article that is in contact with the first transport surface and a portion thereof that is in contact with the second transport surface, due to the first transport surface and the second transport surface having friction coefficients different from each other. Specifically, the portion in contact with one of the first transport surface and the second transport surface that has a larger friction coefficient is subjected to a larger frictional force than the portion in contact with the transport surface having a smaller friction coefficient, and thus is moved more quickly to the downstream side in the transport direction. This makes it possible to rotate the article to change the orientation thereof. In this manner, to perform the transport and the orientation change of the article, this configuration only requires the first belt conveyor and the second belt conveyor including the respective belt members having friction coefficients different from each other. Accordingly, it is possible to realize a simplified structure as compared with conventional article transport apparatuses that require a large number of conveyors. In addition, since the orientation of the article can be changed using a difference in the friction coefficient between the first transport surface and the second transport surface, the control relating to the driving directions and the driving speed between the first belt conveyor and the second belt conveyor can be easily simplified.

Further features and advantages of the technique according to the present disclosure will become apparent from the following description of illustrative and non-limiting embodiments with reference to the drawings.

### Brief Description of the Drawings

FIG. 1 is a perspective view of an assorting system including an article transport apparatus.
FIG. 2 is a plan view of the assorting system including the article transport apparatus.
FIG. 3 is a perspective view schematically showing a part of a multi-row assorting device.
FIG. 4 is a side view of the assorting system including the article transport apparatus.
FIG. 5 is a diagram schematically showing a first belt conveyor and a second belt conveyor, as viewed in a transport direction.
FIG. 6 is a plan view showing a state in which an article undergoes an orientation change.
FIG. 7 shows diagrams showing the state in which the article undergoes an orientation change, as viewed in the transport direction.
FIG. 8 is a diagram illustrating a case where the orientation of an article is corrected by a correction member.
FIG. 9 is a diagram illustrating a case where the position of an article is corrected by a correction member.

### Best Mode for Carrying out the Invention

Hereinafter, an embodiment of an article transport apparatus will be described, by way of an example, a case where the article transport apparatus is applied to an assorting system.

### Assorting System

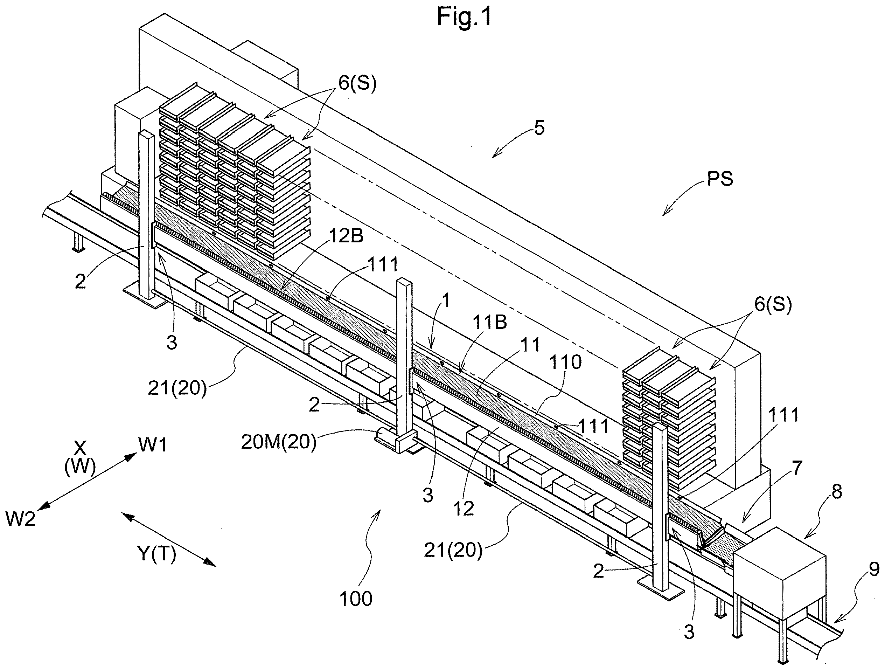

First, an assorting system PS will be described with reference to FIGS. 1 to 4. As shown in FIG. 1, the assorting system PS is provided, for example, in a distribution facility owned by an enterprise running a mailorder business, and assorts and retrieve required articles G from a plurality of stored articles G. For example, the assorting system PS assorts required articles G from a plurality of articles G stored in an automatic warehouse (not shown). In this case, the plurality of articles G are stored in the automatic warehouse while being housed in containers by type of articles. Also, the plurality of articles G housed by type in the containers are automatically unloaded from the automatic warehouse, and are separated into individual articles G in an article unpacking section (not shown). Thereafter, each of the plurality of articles G is separately transported. Note that the concept "article G" includes, for example, various products such as food products and housewares, and workpieces that are used on product lines of factories. That is, articles G to be assorted include various type of objects.

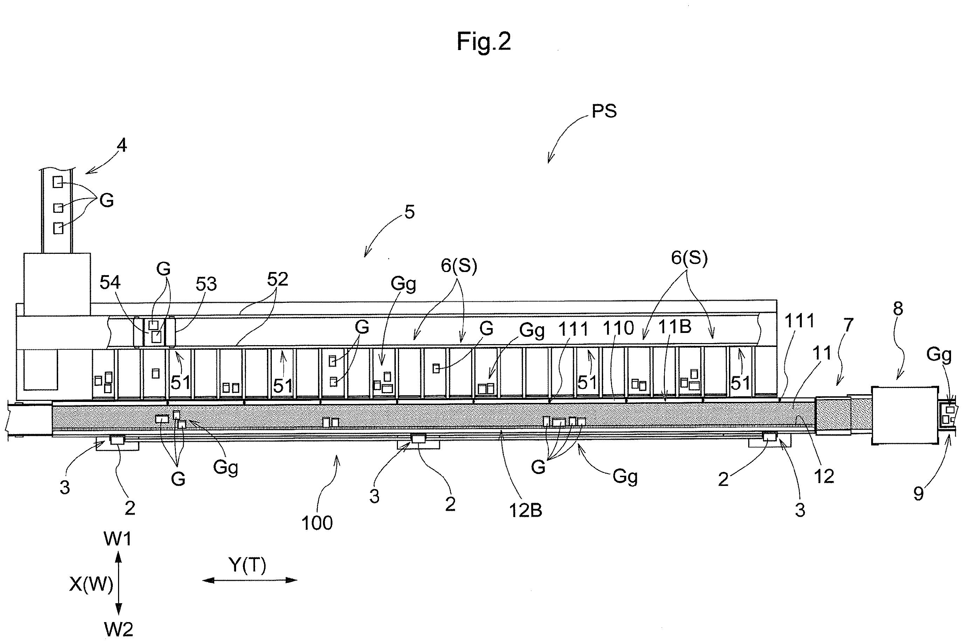

The assorting system PS includes a multi-row assorting device 5, unloading conveyors 6 each configured to receive articles G from the multi-row assorting device 5 and transport the received articles G in a first direction X extending away from the multi-row assorting device 5, and an elevating conveyor 1 configured to receive articles G from the unloading conveyors 6 and transport the articles G in a second direction Y intersecting (in the illustrated example, orthogonal to) the first direction X as viewed in a vertical direction. Additionally, as shown in FIG. 2, the assorting system PS of the present example includes a loading device 4 configured to load articles G into the multi-row assorting device 5, a delivery/reception device 7 configured to deliver and receive articles G to and from the elevating conveyor 1, an automatic introduction device 8, and an unloading device 9. In the present example, the delivery/reception device 7 receives the article G from the elevating conveyor 1, and transport the received article G to the automatic introduction device 8. The automatic introduction device 8 introduces a plurality of articles G or a single G that has been collected based on order information described below to the unloading device 9 as an article group Gg. Then, the unloading device 9 unloads the article group Gg to an unloading location (not shown).

### Loading Device

The loading device 4 sequentially loads, into the multi-row assorting device 5, articles G that have been unloaded from the automatic warehouse while being housed in containers by type of articles, and have been separated into individual pieces in the article unpacking section. In the example shown in FIG. 2, the loading device 4 is configured as a conveyor.

### Multi-Row Assorting Device

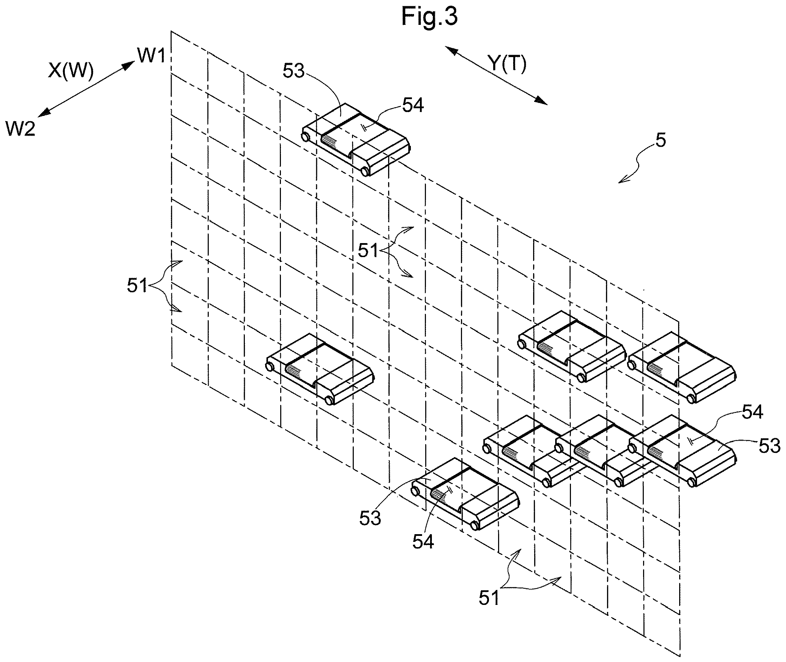

The multi-row assorting device 5 is a device for assorting the articles G loaded from the loading device 4. As shown in FIG. 3, the multi-row assorting device 5 includes a plurality of rows of frontages 51 at different heights in the vertical direction, and assorts and discharges the articles G into one of the plurality of rows of frontages 51. In the illustrated example, the multi-row assorting device 5 includes a plurality of frontages 51 arranged in an orthogonal grid composed of a plurality of rows and a plurality of columns.

The multi-row assorting device 5 assorts the articles G into one of the plurality of frontages 51 based on order information. In the present example, the multi-row assorting device 5 assorts articles G by discharging the articles G from a specific frontage 51 determined based on the order information, and delivering the articles G to the corresponding unloading conveyor 6. Here, the order information indicates an order (picking order) specifying, for example, the type and the number of articles G to be shipped (the articles G may be articles of a single type, or may be a combination of articles of a plurality of types). Also, the multi-row assorting device 5 assorts articles G by discharging one or more articles G specified by each order to a frontage 51 that differ from one order to another.

Although a detailed illustration has been omitted, the multi-row assorting device 5 includes, for example, an article discrimination unit for discriminating each article G. The multi-row assorting device 5 assorts articles G based on a result of discrimination performed by the article discrimination unit. For example, the article discrimination unit includes a camera for capturing images of articles G, and is configured to discriminate each article G by executing image recognition processing on image data captured by the camera. However, the present disclosure is not limited to such a configuration. For example, it is possible to adopt a configuration in which an IC tag, a bar code, or the like (storage unit) configured to store article information is attached to each article G, and the article discrimination unit includes a reader (reading unit) configured to read the article information, and is configured to discriminate the article G based on the article information read by the reader.

In the present embodiment, as shown in FIGS. 2 to 4, the multi-row assorting device 5 includes rails 52, and a plurality of transport carriages 53 that move along the rails 52. The rails 52 include horizontal portions extending in a horizontal direction (the second direction Y) for each of the plurality of rows in which the frontages 51 are provided. Each of the transport carriages 53 is configured to travel along the horizontal portions of the rails 52, thereby transporting articles G in the second direction Y. Also, the rails 52 may include vertical portions extending in the vertical direction and connecting the horizontal portions disposed for each of the plurality of rows. In this case, the transport carriages 53 are configured to be raised and lowered along the vertical portions of the rails 52, and thus can be moved to each of the horizontal portions disposed for each of the plurality of rows. In this case, the number of transport carriages 53 is not limited to the number of rows in which the frontages 51 are provided. Therefore, it is possible, for example, to place a larger number or a smaller number of transport carriages 53 than the number of rows in which the frontages 51 are provided. In the example shown in FIG. 3, eight transport carriages 53 are disposed for eight rows of frontages 51.

In the present embodiment, each of the transport carriages 53 includes a discharge conveyor 54 configured to support the articles G from below and discharge the articles G from each frontage 51. The discharge conveyor 54 moves the articles G from a travel path of the transport carriage 53 in the first direction X.

### Unloading Conveyor

Each unloading conveyor 6 is a device for transporting articles G that have been assorted by the multi-row assorting device 5. In the present embodiment, the unloading conveyors 6 are provided in one-to-one correspondence with the plurality of rows of frontages 51, and are configured to temporarily store the articles G discharged from the frontages 51 by the multi-row assorting device 5 and transport the stored articles G in the first direction X. In the present embodiment, a plurality of unloading conveyors 6 are arranged in the second direction Y in each of the plurality of rows in one-to-one correspondence with a plurality of columns of frontages 51.

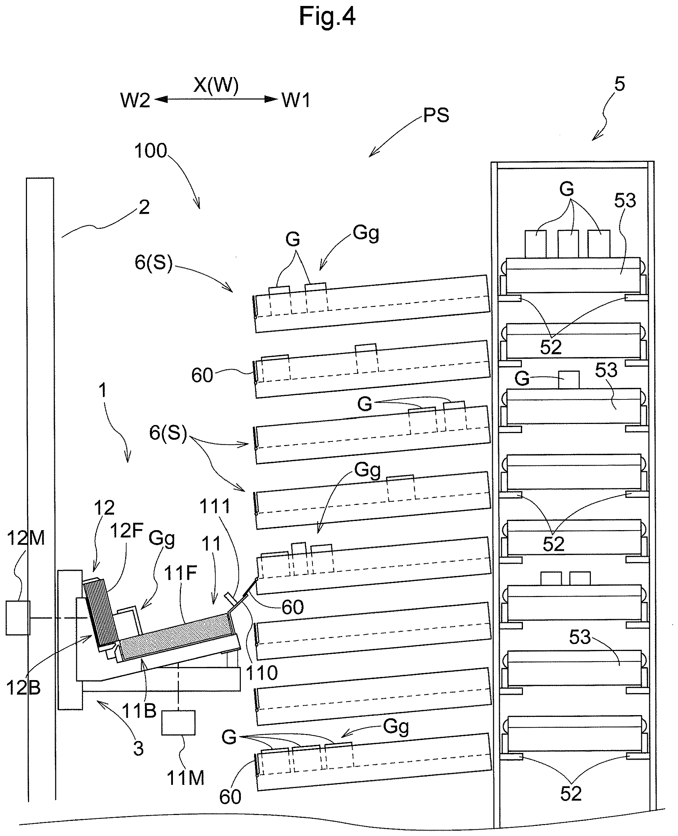

As shown in FIGS. 2 and 4, each of the unloading conveyors 6 transports articles G in units of article groups Gg, each of which is a set of plurality of articles G for each order, and discharges the articles G to the elevating conveyor 1. The number of articles G constituting one article group Gg varies from one order to another. For example, for a certain order, one article G may constitute one article group Gg. As shown in FIG. 4, in the present embodiment, each of the unloading conveyors 6 includes a stopper 60 for temporarily storing the articles G discharged from the corresponding frontage 51. Then, the articles G discharged from the frontage 51 are blocked by the stopper 60, and stored until the entire article group Gg based on the order information has been discharged. When the entire article group Gg based on the order information has been discharged, the stopper 60 changes its orientation to release the blocking of the articles G. In the present example, the stopper 60 is formed by a plate-shaped member that pivots (i.e., swings) about an axis extending in the second direction Y, and is configured to change its orientation through pivoting.

### Elevating Conveyor

The elevating conveyor 1 is a device capable of being raised and lowered in the vertical direction and configured to transport, in the second direction Y, the articles G discharged from the unloading conveyors 6. The elevating conveyor 1 is orientated in the second direction Y, and is adjacent to the unloading conveyors 6 in the first direction X.

The elevating conveyor 1 is supported by supporting portions 3 capable of being raised and lowered along masts 2. In the present example, a plurality of masts 2 are spaced apart from each other in the second direction Y, and the masts 2 are provided with the respective supporting portions 3 that support the elevating conveyor 1.

The masts 2 are provided with an elevation driving unit 20 configured to raise and lower the supporting portions 3. The elevation driving unit 20 includes at least one elevation motor 20M, at least one rotational body (not shown) driven to rotate by the elevation motor 20M, and at least one endless body (not shown) wound on the corresponding rotational body. The endless body is coupled to the corresponding supporting portion 3. The endless body is driven as a result of the rotational body being rotated by the elevation motor 20M, whereby the supporting portions 3 are raised and lowered. For example, the rotational body is a pulley, and the endless body is a belt.

In the present embodiment, each of the plurality of masts 2 is provided with the rotational body and the endless body described above, and one of the plurality of masts 2 is provided with the elevation motor 20M. Also, the elevation motor 20M is drivingly coupled to the respective rotational bodies of the plurality of masts 2 by drive coupling shafts 21. Thus, the respective supporting portions 3 of the plurality of masts 2 are configured to be raised and lowered in synchronization with each other.

The elevating conveyor 1 is configured to be raised and lowered in response to each of the plurality of supporting portions 3 being raised and lowered along the corresponding mast 2. Thus, the elevating conveyor 1 is configured to move to heights respectively corresponding to the plurality of unloading conveyors 6 disposed in a plurality of rows, and receive articles G from each of the unloading conveyors 6 disposed in the plurality of rows. Also, the elevating conveyor 1 is disposed continuously over the entire region in the second direction Y in which the elevating conveyor 1 is supported by the plurality of supporting portions 3. Thus, the elevating conveyor 1 is configured to receive articles G from all of the unloading conveyors 6 arranged in the second direction Y. Also, the elevating conveyor 1 transports, in the second direction Y, the articles G discharged from the unloading conveyors 6, and delivers the articles G to the delivery/reception device 7.

### Delivery /Reception Device

The delivery/reception device 7 is a device that delivers and receives the articles G to and from the elevating conveyor 1. The delivery/reception device 7 is adjacent to the elevating conveyor 1 in the second direction Y. In the present embodiment, the delivery/reception device 7 is configured to receive, from the elevating conveyor 1, the articles G transported by the elevating conveyor 1. In the present example, the delivery/reception device 7 is formed by a conveyor.

The delivery/reception device 7 transports the articles G received from the elevating conveyor 1 to the automatic introduction device 8. Then, as described above, the automatic introduction device 8 introduces a plurality of articles G or a single article G that has been collected based on the order information to the unloading device 9 as an article group Gg. The unloading device 9 unloads the article group Gg introduced by the automatic introduction device 8 to an unloading location (not shown).

### Article Transport Apparatus

Next, a configuration of an article transport apparatus 100 according to the present disclosure will be described.

The article transport apparatus 100 is an apparatus for transporting articles G. Here, a case where the article transport apparatus 100 is applied to the assorting system PS is described by way of an example, and the article transport apparatus 100 constitutes a part of the assorting system PS. In the present embodiment, the article transport apparatus 100 includes the elevating conveyor 1 and the unloading conveyors 6 described above.

In the following description, a "transport direction T" is a direction in which the articles G are transported by the elevating conveyor 1, and a width direction W is a direction orthogonal to the transport direction T as viewed in the vertical direction. That is, in the present embodiment, the "transport direction T" coincides with the "second direction Y" used to describe the overall configuration of the assorting system PS, and the "width direction W" coincides with the "first direction X". Here, a first side W1 in the width direction is one side in the width direction W, and a second side W2 in the width direction is the other side in the width direction W.

The article transport apparatus 100 is an apparatus that transports the articles G in the transport direction T, and includes a first belt conveyor 11 extending in the transport direction T, and a second belt conveyor 12 adjacent to the first belt conveyor 11 on the second side W2 in the width direction and extending in the transport direction T. In the present embodiment, the elevating conveyor 1 constituting a part of the article transport apparatus 100 includes the first belt conveyor 11 and the second belt conveyor 12. That is, in the present embodiment, the first belt conveyor 11 and the second belt conveyor 12 are supported by the supporting portions 3 respectively provided along the plurality of masts 2 in such a manner as to be capable of being raised and lowered, and are configured to be raised and lowered along each of the plurality of masts 2.

Also, the article transport apparatus 100 includes supply sections S configured to supply the articles G to the first belt conveyor 11. The supply sections S supply the articles G to the first belt conveyor 11 from the first side in the width direction W1. In the present embodiment, the unloading conveyors 6 are the supply sections S. That is, in the present embodiment, the supply sections S are provided in one-to-one correspondence with the plurality of frontages 51, and move, in the width direction W (first direction X), the articles G discharged from the frontages 51.

As shown in FIG. 4, the first belt conveyor 11 includes a first belt member 11B forming a first transport surface 11F with which the articles G being transported come into contact, and a first driving unit 11M configured to drive the first belt member 11B. The first transport surface 11F is formed by a surface of the first belt member 11B. In the present example, the first transport surface 11F is formed in a planar shape. The first driving unit 11M is formed by a motor, for example, and drives the first belt member 11B by rotating a rotational body (not shown) such as a pulley around which the first belt member 11B is wound.

The second belt conveyor 12 includes a second belt member 12B forming a second transport surface 12F with which the articles G being transported come into contact, and a second driving unit 12M configured to drive the second belt member 12B. The second transport surface 12F is formed by a surface of the second belt member 12B. In the present example, the second transport surface 12F is formed in a planar shape. The second driving unit 12M is formed by a motor, for example, and drives the second belt member 12B by rotating a rotational body (not shown) such as a pulley around which the second belt member 12B is wound.

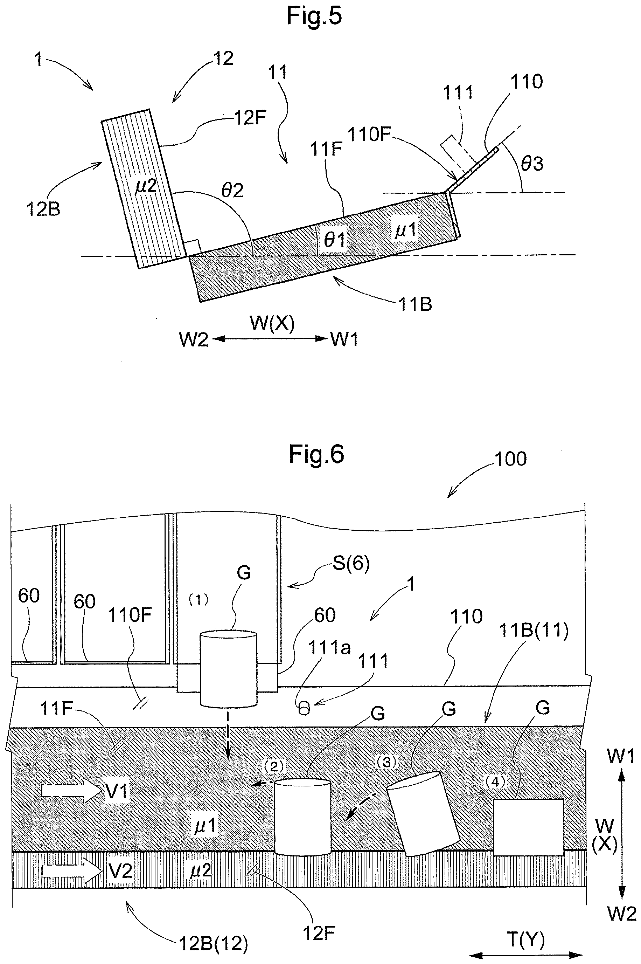

In the present embodiment, the first driving unit 11M and the second driving unit 12M include separate drive sources. That is, the first driving unit 11M drives the first belt member 11B independently of the second driving unit 12M, and the second driving unit 12M drives the second belt member 12B independently of the first driving unit 11M. As shown in FIG. 6, in the present embodiment, the first driving unit 11M drives the first belt member 11B at a first transport speed V1. The second driving unit 12M drives the second belt member 12B at a second transport speed V2. In the present example, the first transport speed V1 and the second transport speed V2 are set to the same speed.

As shown in FIG. 4, the first transport surface 11F is configured to allow the articles G being transported to be placed thereon. In other words, the first transport surface 11F is configured to come into contact, from below, with the articles G being transported. As also shown in FIG. 5, the first transport surface 11F is inclined downward toward the second side W2 in the width direction. Thus, an article G that has been supplied by the supply section S can be moved, using gravity, from the first side in the width direction W1 to the second side W2 in the width direction on the first transport surface 11F.

As shown in FIG. 4, the second transport surface 12F is adjacent to the first transport surface 11F on the second side W2 in the width direction, and is configured to come into contact, from the second side W2 in the width direction, with the articles G placed on the first transport surface 11F. More specifically, the second transport surface 12F is configured to receive, from the second side W2 in the width direction, an article G that has been moved from the first side in the width direction W1 to the second side W2 in the width direction on the first transport surface 11F. In the present embodiment, the second transport surface 12F is inclined upward toward the second side W2 in the width direction. Also, as shown in FIG. 5, the inclination angle (referred to as a "second inclination angle θ2") of the second transport surface 12F relative to a horizontal plane in the width direction W is larger than the inclination angle (referred to as a "first inclination angle θ1") of the first transport surface 11F relative to the horizontal plane in the width direction W. In this manner, the second transport surface 12F is disposed with an inclination steeper than that of the first transport surface 11F in the width direction W. Thus, an article G that has been moved toward the second side W2 in the width direction on the first transport surface 11F can be appropriately received by the second transport surface 12F, and be brought into contact with both the first transport surface 11F and the second transport surface 12F. Note that the "inclination angle ... relative to a horizontal plane" means a smaller angle of two angles formed by the transport surface and the horizontal plane.

In the present embodiment, the first transport surface 11F and the second transport surface 12F form an angle set within the range of 90° to 110°, as viewed in the transport direction T . In the illustrated example, the angle is set to 90°. Thus, for example, in the case of transporting an article G having a shape that is generally used with a high frequency such as a rectangular parallelepiped shape or a columnar shape, it is possible to secure a large contact area of the article G with each of the first transport surface 11F and the second transport surface 12F, thus transporting the article G in a stable state.

In the present embodiment, the first belt conveyor 11 includes a guide frame 110 configured to guide the articles G supplied from the supply sections S to the first transport surface 11F. The guide frame 110 is extends in the transport direction T at a position adjacent to the first transport surface 11F on the first side in the width direction W1. In the present example, the guide frame 110 is formed by a plate-shaped member.

The guide frame 110 has a guide surface 110F that comes into contact with the articles G supplied from the supply sections S. The guide surface 110F is disposed between the first transport surface 11F and the supply sections S (stoppers 60) in the width direction W, and comes into contact, from below, with the articles G supplied from the supply sections S.

In the present embodiment, the guide surface 110F is inclined downward toward the second side W2 in the width direction. Also, as shown in FIG. 5, the inclination angle (referred to as a "third inclination angle θ3") of the guide surface 110F relative to a horizontal plane in the width direction W is larger than the first inclination angle θ1, and smaller than the second inclination angle θ2. That is, the guide surface 110F is inclined in the same direction as the first transport surface 11F, and has a steeper inclination than that of the first transport surface 11F. Thus, the articles G supplied from the supply sections S can be guided to the first transport surface 11F, with momentum imparted by the steep inclination of the guide surface 110F. Accordingly, the articles G can be easily moved from the first side in the width direction W1 to the second side W2 in the width direction on the first transport surface 11F.

Here, as described above, the assorting system PS handles articles G having various shapes. That is, articles G that are to be transported by the article transport apparatus 100 include articles having various shapes. For example, articles G whose general shape is a cube, a rectangular parallelepiped, a column, a polygonal column, or the like are to be transported. For example, in the case where an article G having a rectangular parallelepiped shape is to be transported, it is preferable to transport the article G with the article G being laid down, or in other words, with the article G being in an orientation in which the longitudinal direction of the article G extends in the transport direction T, from the viewpoint of increasing the stability of the article G during transport. For example, in the case where an article G having a columnar shape is to be transported, the article G rolls in the transport direction T in an orientation in which the axial direction of the article G extends in the width direction, and therefore, the article G is not stably positioned. Accordingly, for such an article G having a columnar shape, it is preferable to transport the article G in an orientation in which the axial direction of the article G extends in the transport direction T, from the viewpoint of increasing the stability of the article G during transport as described above. In this manner, in the article transport apparatus 100, it is required that the orientation of an article G is changed while transporting the article G.

Accordingly, in the article transport apparatus 100, the surface friction coefficient (referred to as a first friction coefficient µ1) of the first belt member 11B and the surface friction coefficient (referred to as a second friction coefficient p2) of the second belt member 12B are different from each other. In the present embodiment, the first friction coefficient µ1 is lower than the second friction coefficient p2. More specifically, the first friction coefficient µ1 is set within the range of 0.4 to 0.6 times the second friction coefficient p2. For example, the first belt member 11B is preferably formed of a material obtained by impregnating a woven fabric with polyester. The second belt member 12B is preferably formed of a material obtained by coating the surface of a woven fabric with polyurethane. With the above-described configuration, the article G is more likely to slide on the first transport surface 11F having the first friction coefficient µ1, and the article G is less likely to slide on the second transport surface 12F having the second friction coefficient p2. This makes it possible to draw a portion of the article G toward the transport direction T on the transport surface having a higher friction coefficient. That is, it is possible to change the orientation of the article G using a difference in friction coefficient. This will be specifically described below.

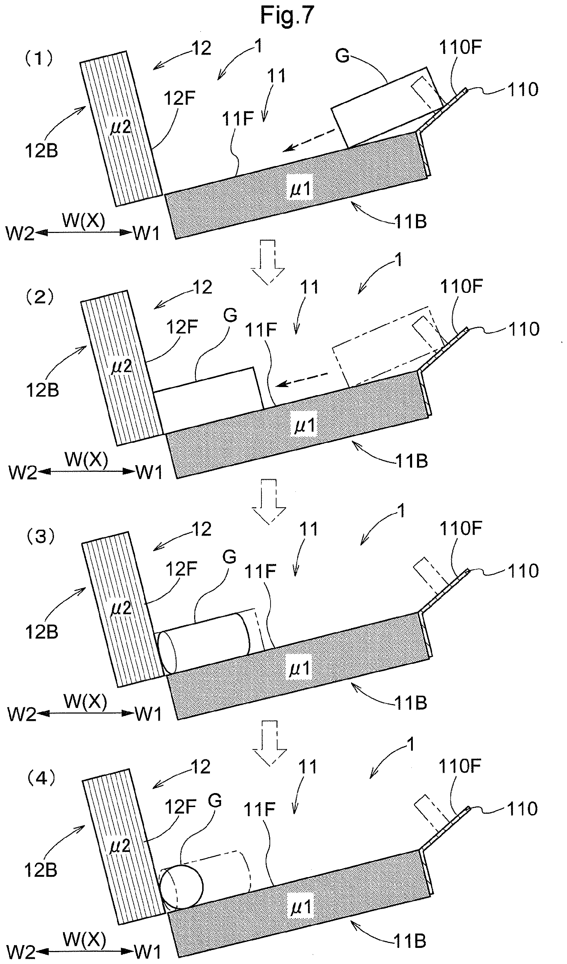

FIGS. 6 and 7 show a state in which an article G having a columnar shape is transported as an example. As described above, the first friction coefficient µ1 is lower than the second friction coefficient p2, and the first transport surface 11F is more likely to cause sliding of the article G than the second transport surface 12F. Accordingly, the article G supplied from a supply section S passes the guide surface 110F before moving from the first side in the width direction W1 to the second side W2 in the width direction on the first transport surface 11F (the state shown in (1) in FIGS. 6 and FIG. 7). Here, since the first transport surface 11F is more likely to cause sliding, the article G moves to the second side W2 in the width direction on the first transport surface 11F, while being subjected to the action of the force in the transport direction T by the first transport surface 11F driven at the first transport speed V1.

The article G that has moved to the second side W2 in the width direction on the first transport surface 11F comes into contact with the second transport surface 12F disposed on the second side W2 in the width direction relative to the first transport surface 11F (the state shown in (2) in FIGS. 6 and 7). The second friction coefficient p2 is higher than the first friction coefficient µ1, and the second transport surface 12F is less likely to cause sliding than the first transport surface 11F. Therefore, a portion of the article G that is in contact with the second transport surface 12F is more likely to be subjected to the force in the transport direction T caused by the second transport surface 12F driven at the second transport speed V2 than a portion of the article G that is in contact with the first transport surface 11F. On the other hand, as described above, the portion of the article G that is in contact with the first transport surface 11F is more likely to cause sliding than the portion of the article G with which the second transport surface 12F is in contact. Thus, at a timing at which the article G comes into contact with the second transport surface 12F, the portion of the article G that is in contact with the second transport surface 12F is drawn in the driving direction of the second transport surface 12F (the transport direction T) relative to the portion of the article G that is in contact with the first transport surface 11F. As a result, the article G is rotated using the portion thereof in contact with the second transport surface 12F as a fulcrum (the state shown in (3) in FIGS. 6 and 7). Thus, the article G assumes an orientation in which the longitudinal direction (here, the axial direction) thereof extends in the transport direction T (the state shown in (4) in FIGS. 6 and 7). Thus, the article G is less likely to roll in the transport direction T on the first transport surface 11F. In addition, the article G is disposed at the lowermost positions of the first transport surface 11F and the second transport surface 12F, and is therefore less likely to roll in the width direction W as well. This can increase the stability of the article G during transport. As described above, this configuration allows the orientation of the article G to be changed with a simple structure by utilizing differences in inclination and friction coefficient between the transport surfaces.

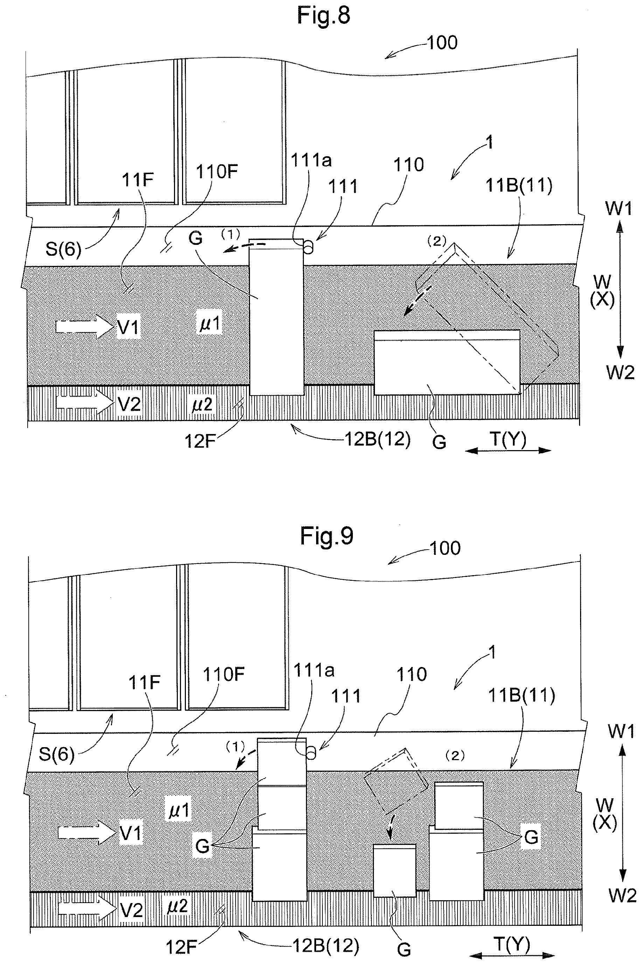

FIG. 8 shows a state in which an article G having a rectangular parallelepiped shape is transported as an example. As shown in FIG. 8, depending on the size and the shape of the article G, the dimension in the longitudinal direction of the article G may be larger than the dimension in the width direction W of the first transport surface 11F. In the case where an article G is in a state in which the longitudinal direction thereof extends in the width direction W, and where the orientation of the article G is not changed, due to the influence of the weight, the shape, or the like, even after coming into contact with the second transport surface 12F, the article G may protrude from the first transport surface 11F toward the first side in the width direction W1.

For this reason, in the present embodiment, the first belt conveyor 11 includes correction members 111 configured to correct the orientation of articles G that are placed and transported on the first transport surface 11F. The correction members 111 are disposed at positions that are located downstream in the transport direction T relative to a position at which an article G is supplied by a supply section S, and adjacent to an edge of the first transport surface 11F on the first side in the width direction W1, and protrude upward of the first transport surface 11F. In the present embodiment, a plurality of correction members 111 are spaced apart from each other in the transport direction T at positions adjacent to the edge of the first transport surface 11F on the first side in the width direction W1 (see FIG. 1, etc.). That is, the "supply section S" in the expression "located downstream in the transport direction T of a position at which an article G is supplied by a supply section S" refers to, among the plurality of supply sections S (unloading conveyors 6) arranged in the transport direction T, a "specific supply section S (unloading conveyor 6)" that supplies an article G to be transported. Therefore, depending on the positional relationship with any of the plurality of supply sections S, there may be a correction member 111 disposed upstream in the transport direction T relative to that supply section S. In the present example, the correction members 111 are provided on the guide frame 110. Specifically, the correction members 111 protrude upward from the guide surface 110F of the guide frame 110.

If any article G is transported in an orientation in which the article G protrudes toward the first side in the width direction W1 relative to the edge of the first transport surface 11F on the first side in the width direction W1, such a configuration allows the article G to abut on an correction member 111 while moving in the transport direction T (the state shown in (1) in FIG. 8). This makes it possible to move the entire article G toward the first transport surface 11F side (the second side W2 in the width direction), and correct the orientation of the article G to an orientation in which the longitudinal direction of the article G extends in the transport direction T (the state shown in (2) in FIG. 8). That is, if any article G having a large dimension in the longitudinal direction as described above is transported while protruding from the first transport surface 11F toward the first side in the width direction W1, the presence of the correction member 111 allows the orientation of the article G to be corrected to an appropriate orientation.

In the present embodiment, each correction member 111 has, at a portion thereof facing an upstream side in the transport direction T, a curved surface 111a that is convex toward the upstream side. Accordingly, the curved surface 111a of the correction member 111 comes into contact with the article G that is transported while protruding from the first transport surface 11F toward the first side in the width direction W1. Thus, as compared with a case where the correction member 111 has an angled portion at the portion thereof facing the upstream side in the transport direction T, when a correction member 111 and an article G comes into contact with each other, it is possible to prevent the correction member 111 from catching the article G, or coming into contact with the article G with a strong pressure applied locally. Accordingly, it is possible to reduce the possibility of causing damage to the article G. In the present example, each of the correction members 111 is formed in a columnar shape having an axis extending in a direction orthogonal to the guide surface 110F.

In addition to correcting the orientation of an article G that is placed and transported on the first transport surface 11F, the correction member 111 corrects the position of the article G in the width direction W. For example, as shown in FIG. 9, a plurality of articles G may be successively supplied to the first belt conveyor 11 from the supply section S, and be arranged in the width direction W on the first transport surface 11F. In such a case, some of the plurality of articles G may protrude to the first side in the width direction W1 from the first transport surface 11F. However, with the above-described configuration, any of the plurality of articles G that protrudes toward the first side in the width direction W1 from the first transport surface 11F can be caused to abut on the correction member 111 while being moved in the transport direction T (the state shown in (1) in FIG. 9). Thus, the article G protruding from the first transport surface 11F can be moved toward the first transport surface 11F side (the second side W2 in the width direction) (the state shown in (2) in FIG. 9). In this manner, in a case where some of the plurality of articles G are transported while protruding from the first transport surface 11F toward the first side in the width direction W1, the presence of the correction member 111 allows the positions of the articles G protruding from the first transport surface 11F to be corrected to appropriate positions. Such positional correction is not limited to a case where a plurality of articles G are arranged in the width direction W on the first transport surface 11F, and may be carried out in a case where there is only one article G. More specifically, even in a case where one article G is transported, the article G may stop at an intermediate portion of the first transport surface 11F, and partly protrude to the first side in the width direction W1 from the first transport surface 11F, if the article G itself is of a material, shape, or the like having characteristics that makes the article G less likely to slide on the first transport surface 11F. In this case as well, the article G can be caused to abut on the correction member 111 while being transported, and be moved to the second side W2 in the width direction on the first transport surface 11F. That is, as in the case described above, the position of the article G can be corrected to an appropriate position by the correction member 111.

### Other Embodiments

Next, other embodiments of the article transport apparatus will be described.
(1) The above embodiment has described an example in which the first transport surface 11F and the second transport surface 12F form an angle set within the range of 90° to 110°, as viewed in the transport direction T. However, the present disclosure is not limited to such an example, and the angle formed by the first transport surface 11F and the second transport surface 12F as viewed in the transport direction T may be set within the range of 120° to 150°, for example. Doing so can reduce the impact generated when the article G moving toward the second side W2 in the width direction on the first transport surface 11F comes into contact with the second transport surface 12F.
(2) The above embodiment has described an example in which the surface friction coefficient (first friction coefficient µ1) of the first belt member 11B is lower than the surface friction coefficient (second friction coefficient p2) of the second belt member 12B. However, this relationship may be reversed, and the second friction coefficient p2 may be lower than the first friction coefficient µ1.
(3) The above embodiment has described, by way of an example, a configuration in which the inclination angle (second inclination angle θ2) of the second transport surface 12F relative to a horizontal plane in the width direction W is larger than the inclination angle (first inclination angle θ1) of the first transport surface 11F relative to the horizontal plane in the width direction W. However, the present disclosure is not limited thereto, and it is possible to adopt a configuration in which the inclination angle (second inclination angle θ2) of the second transport surface 12F relative to a horizontal plane in the width direction W may be smaller than the inclination angle (first inclination angle θ1) of the first transport surface 11F relative to the horizontal plane in the width direction W.
(4) The above embodiment has described an example in which a plurality of correction members 111 are spaced apart from each other in the transport direction T at positions adjacent to an edge of the first transport surface 11F on the first side in the width direction W1. However, the present disclosure is not limited to such an example, and only one correction member 111, rather than a plurality of correction members 111, may be provided. In this case, the correction member 111 may be disposed downstream, in the transport direction T, relative to all of the plurality of supply sections S arranged in the transport direction T. The present disclosure is not limited to the above-described examples, and the first belt conveyor 11 need not include any correction member 111.
(5) The above embodiment has described an example in which the first driving unit 11M and the second driving unit 12M include separate drive sources. However, the present disclosure is not limited to such an example, and the first driving unit 11M and the second driving unit 12M may include a mutually common drive source. That is, the first belt member 11B and the second belt member 12B may be driven by a common drive source.
(6) The above embodiment has described an example in which the first transport speed V1 and the second transport speed V2 are set at the same speed. However, the present disclosure is not limited to such an example, and the first transport speed V1 and the second transport speed V2 may be set at speeds different from each other.
(7) The above embodiment has described an example in which the unloading conveyors 6 are used as the supply sections S. However, the present disclosure is not limited to such an example, and the supply sections S each may be any device that supplies an article G to the first belt conveyor 11, and may be formed, for example, by a transport carriage, a stacker crane, or the like.
(8) The above embodiment has described an example in which the elevating conveyor 1 extends continuously over the entire region in the transport direction T (second direction Y) in which the elevating conveyor 1 is supported by a plurality of supporting portions 3. However, the present disclosure is not limited to such an example, and the elevating conveyor 1 may be a structure divided in the transport direction T. That is, the elevating conveyor 1 may include a plurality of first belt conveyors 11 arranged in the transport direction T, and a plurality of second belt conveyors 12 arranged in the transport direction T.
(9) Note that the configurations disclosed in the embodiments described above are applicable in combination with configurations disclosed in other embodiments as long as no inconsistency arises. With regard to the other configurations as well, the embodiments disclosed herein are illustrative in all respects. Therefore, various modifications and alterations may be made as appropriate without departing from the gist of the present disclosure.

### Outline of the Embodiment

The article transport apparatus described above will be described below.

An article transport apparatus configured to transport an article in a transport direction, including:
with a width direction being a direction orthogonal to the transport direction as viewed in a vertical direction, a first side in the width direction being one side in the width direction, and a second side in the width direction being another side in the width direction,
a first belt conveyor extending in the transport direction;
a second belt conveyor adjacent to the first belt conveyor on the second side in the width direction and extending in the transport direction; and
a supply section configured to supply the article to the first belt conveyor,
wherein the first belt conveyor includes a first belt member forming a first transport surface with which the article being transported comes into contact, and a first driving unit configured to drive the first belt member,
the second belt conveyor includes a second belt member forming a second transport surface with which the article being transported comes into contact, and a second driving unit configured to drive the second belt member,
the supply section is configured to supply the article to the first belt conveyor from the first side in the width direction,
the first transport surface is configured to allow the article being transported to be placed thereon, and is inclined downward toward the second side in the width direction,
the second transport surface is adjacent to the first transport surface on the second side in the width direction, and is configured to come into contact, from the second side in the width direction, with the article placed on the first transport surface, and
a surface friction coefficient of the first belt member and a surface friction coefficient of the second belt member are different from each other.

With this configuration, the article supplied to the first belt conveyor by the supply section can be moved, by the inclination of the first transport surface, from the first side in the width direction toward the second side in the width direction on which the second belt conveyor is disposed, and be brought into contact with the second transport surface. Upon the article being brought into contact with both the first transport surface and the second transport surface from the state in which the article moves toward the second side in the width direction while being in contact with only the first transport surface, the force acting in the transport direction can be made different between a portion of the article that is in contact with the first transport surface and a portion thereof that is in contact with the second transport surface, due to the first transport surface and the second transport surface having friction coefficients different from each other. Specifically, the portion in contact with one of the first transport surface and the second transport surface that has a larger friction coefficient is subjected to a larger frictional force than the portion in contact with the transport surface having a smaller friction coefficient, and thus is moved more quickly to the downstream side in the transport direction. This makes it possible to rotate the article to change the orientation thereof. In this manner, to perform the transport and the orientation change of the article, this configuration only requires the first belt conveyor and the second belt conveyor including the respective belt members having friction coefficients different from each other. Accordingly, it is possible to realize a simplified structure as compared with conventional article transport apparatuses that require a large number of conveyors. In addition, since the orientation of the article can be changed using a difference in the friction coefficient between the first transport surface and the second transport surface, the control relating to the driving directions and the driving speed between the first belt conveyor and the second belt conveyor can be easily simplified.

Here, it is preferable that the surface friction coefficient of the first belt member is lower than the surface friction coefficient of the second belt member.

With this configuration, the article can be easily moved toward the second side in the width direction on the first transport surface, and can be appropriately brought into contact with the second transport surface with a higher probability. Also, upon the article being brought into contact with both the first transport surface and the second transport surface, the portion of the article that is in contact with the second transport surface can be more quickly moved to the downstream side in the transport direction than the portion thereof in contact with the first transport surface, and therefore the orientation of the article can be changed appropriately.

It is preferable that the second transport surface is inclined upward toward the second side in the width direction, and
an inclination angle of the second transport surface relative to a horizontal plane in the width direction is larger than an inclination angle of the first transport surface relative to the horizontal plane in the width direction.

With this configuration, the second transport surface is disposed with a steeper inclination in the width direction than the first transport surface. Accordingly, the article that has been moved toward the second side in the width direction on the first transport surface can be appropriately received by the second transport surface, and be brought into contact with both the first transport surface and the second transport surface.

It is preferable that the first transport surface and the second transport surface form an angle set within a range of 90° to 110°, as viewed in the transport direction.

With this configuration, a large contact area of the article with each of the first transport surface and the second transport surface can be easily secured in the case of transporting, for example, an article having a shape that is generally used with a high frequency such as a rectangular parallelepiped shape or a columnar shape. Therefore, a frictional force can be easily exerted on the article from each of the first transport surface and the second transport surface in an appropriate manner. Accordingly, with this configuration, the transport and the orientation change of the article can be easily performed in a more appropriate manner

It is preferable that the first belt conveyor includes a correction member configured to correct an orientation, or a position in the width direction of the article placed and transported on the first transport surface, and
the correction member is disposed at a position being located downstream in the transport direction relative to a position at which the article is supplied by the supply section, and being adjacent to an edge of the first transport surface on the first side in the width direction, and protrudes upward of the first transport surface.

With this configuration, any article supplied in an orientation in which the article protrudes to the first side in the width direction relative to an edge of the first transport surface in the first side in the width direction can be caused to abut on the correction member while being moved in the transport direction. This makes it possible to move the whole of the article to the first transport surface side (the second side in the width direction), and correct the orientation of the article to an orientation in which the longitudinal direction of the article extends in the transport direction. Also, in the case where a plurality of articles are supplied at once from the supply section to the first belt conveyor and arranged on the first transport surface in the width direction, any article protruding to the first side in the width direction relative to the edge of the first transport surface on the first side in the width direction can be caused to abut on the correction member, and be moved to the first transport surface side (the second side in the width direction). That is, the respective positions of the plurality of articles can be corrected to positions on the second side in the width direction on the first transport surface.

### Industrial Applicability

The technique according to the present disclosure is applicable to an article transport apparatus that transports an article.

### Description of Reference Signs

100: Article transport apparatus
11: First belt conveyor
11B: First belt member
11F: First transport surface
11M: First driving unit
111: Correction member
12: Second belt conveyor
12B: Second belt member
12F: Second transport surface
12M: Second driving unit
S: Supply section
θ1: First inclination angle
θ2: Second inclination angle
µ1: First friction coefficient
p2: Second friction coefficient
G: Article
T: Transport direction
W: Width direction
W1: First side in width direction
W2: Second side in width direction

## Claims

1. An article transport apparatus configured to transport an article in a transport direction, comprising:
with a width direction being a direction orthogonal to the transport direction as viewed in a vertical direction, a first side in the width direction being one side in the width direction, and a second side in the width direction being another side in the width direction,
a first belt conveyor extending in the transport direction;
a second belt conveyor adjacent to the first belt conveyor on the second side in the width direction and extending in the transport direction; and
a supply section configured to supply the article to the first belt conveyor,
wherein the first belt conveyor includes a first belt member forming a first transport surface with which the article being transported comes into contact, and a first driving unit configured to drive the first belt member,
the second belt conveyor includes a second belt member forming a second transport surface with which the article being transported comes into contact, and a second driving unit configured to drive the second belt member,
the supply section is configured to supply the article to the first belt conveyor from the first side in the width direction,
the first transport surface is configured to allow the article being transported to be placed thereon, and is inclined downward toward the second side in the width direction,
the second transport surface is adjacent to the first transport surface on the second side in the width direction, and is configured to come into contact, from the second side in the width direction, with the article placed on the first transport surface, and
a surface friction coefficient of the first belt member and a surface friction coefficient of the second belt member are different from each other.

2. The article transport apparatus according to claim 1,
wherein the surface friction coefficient of the first belt member is lower than the surface friction coefficient of the second belt member.

3. The article transport apparatus according to claim 1 or 2,
wherein the second transport surface is inclined upward toward the second side in the width direction, and
an inclination angle of the second transport surface relative to a horizontal plane in the width direction is larger than an inclination angle of the first transport surface relative to the horizontal plane in the width direction.

4. The article transport apparatus according to any one of claims 1 to 3,
wherein the first transport surface and the second transport surface form an angle set within a range of 90° to 110°, as viewed in the transport direction.

5. The article transport apparatus according to any one of claims 1 to 4,
wherein the first belt conveyor includes a correction member configured to correct an orientation, or a position in the width direction of the article placed and transported on the first transport surface, and
the correction member is disposed at a position being located downstream in the transport direction relative to a position at which the article is supplied by the supply section, and being adjacent to an edge of the first transport surface on the first side in the width direction, and protrudes upward of the first transport surface.
